# EUROPEAN PATENT APPLICATION

(11) **EP 2 214 455 A1**
(43) Date of publication of application: **04.08.2010**
(21) Application number: 09014945.1
(22) Date of filing: 02.12.2009
(51) Int. Cl.: H05B 33/08, F21S 2/00

(54) **Illuminating device**

(30) Priority: 29.01.2009 JP 2009018580
(71) Applicant: Yamagata Promotional Organization for Industrial Technology, Yamagata-shi Yamagata 990-2473 (JP)
(72) Inventor: Oda, Atsushi, Yamagata-shi, Yamagata 990-2473 (JP); Shimada, Shinichi, Yamagata-shi, Yamagata 990-2473 (JP)
(74) Representative: HOFFMANN EITLE

(57) **Abstract**

An illuminating device is provided which is capable of being used for a variety of illuminating applications by combining panel cases housing surface light emitting bodies and of realizing light modulation control in a state in which each panel case is being combined. To one end of a long panel case 1 housing the surface light emitting body is connected a hub case 2 housing a power module and to the other end of the panel case 1 are sequentially connected panel case each having same configuration as the panel case 1, in series, via a connector. Driving power is supplied to a power module housed in the panel case of each of sets made up of the serially connected body and light modulation for the surface light emitting bodies housed in the panel cases of each set is exerted independently by the power module housed in the each hub case of each set.

## Description

### BACKGROUND OF THE INVENTION

### Field of the Invention

The present invention relates to an illuminating device using a surface emitting light source typified, for example, by an organic electroluminescent (EL) element.

### Description of the Related Art

An organic EL element provides high light-emitting efficiency by being driven by a DC low voltage and has a characteristic of achieving light weighing and thinning and of low heat generation. Therefore, the organic EL element is employed partially in some type devices as a flat panel display (FPD) and a type of the organic EL element is available which can be used as a surface emitting light source, for example, a back light of a liquid crystal display device.

Moreover, the organic EL element can provide luminescent colors of R (red), G (green), and B (blue) and other colors depending on a material to be used for an EL light emitting layer and, therefore, can also provide a white color or near-white luminescent color by the combined use of two or more luminescent colors. As a result, the organic EL element, when being configured as a surface emitting light source (light emitting panel), can be used, for example, as a light source for decoration and/or as a highly efficient light source that illuminates the inside of a room or somewhere.

There are already many patent applications in which the organic EL element, by taking full advantage of its characteristics described above, is used for various types of illuminating apparatus. In the majority of above applications, a try to remove unevenness in light emission peculiar to the organic EL element is made (see Japanese Patent Application Laid-open No. 2001-52858), a measure is taken to lengthen the life of the organic EL element by forming a sealing film thereon (Japanese Patent Application Laid-open No. 2004-47381), and a challenge is made to expand a light emitting area by minimizing a non-light emitting portion in a power supply section (Japanese Patent Application Laid-open No. 2005-158371).

### SUMMARY OF THE INVENTION

The present invention has been realized by taking full advantage of characteristics of a surface light-emitting body typified by the above-described organic EL element and by focusing attention on aspects of concrete applications. Thus, it is an object of the present invention to provide an illuminating device capable of being applied to a variety of illumination devices by preparing a plurality of panel cases that houses the surface light-emitting body and by combining the plurality of panel cases for use.

The illuminating device of the present invention realized to solve problems described above includes panel cases each housing a surface light-emitting body for illumination, and a hub case to be detachably connected to a part of one of the panel cases housing a power module that can supply driving power to the surface light-emitting body, wherein the panel cases housing the surface light-emitting body are adapted for connecting to other panel cases, and the power module housed in the hub case supplies driving power to each of the panel cases connected to one another.

According to a preferred embodiment of the present invention, the panel cases are so constructed as to be long and wherein the hub case is connected to one end of a first panel and an end of a second panel case formed so as to be long is connected to the other end of the first panel and a third panel case and its succeeding cases each formed so as to be long on the other end side of the second panel are sequentially connected in series.

It is preferably arranged that the power module housed in the hub case supplies driving power to each surface light-emitting body in each of the panel cases connected to the hub case and light modulation control is exerted therein.

Moreover, the illuminating device may be configured so that a plurality of sets each made up of panel cases sequentially connected, in series, to one another with the hub case at the head of the procession of panel cases is provided wherein driving power is supplied to each power module housed in the hub case of each set and light modulation for the surface light emitting bodies housed in the panel cases of each set is exerted independently by the power module housed in the each hub case for every set.

Preferably, the surface light emitting body is made up of an organic EL element.

In the above illuminating device, the hub case housing the power module is detachably connected to the panel case housing the surface light emitting body for illumination and a plurality of panel cases having the same configurations as the above panel case, each housing the surface light emitting body, is able to be connected to one another and, therefore, a length in one direction contributing to illumination can be arbitrarily calibrated by adjusting the number of the panel cases connected to one another.

Also, by providing a plurality of sets each made up of a plurality of the panel cases connected to one another and by gathering the sets in a plane manner, the illuminating device can be used as an illuminating light source that can illuminate a wide area. By attaching the sets obtained by serially connecting a plurality of panel cases as a procession to a riser mounted perpendicularly to a step plate, the illuminating device can be used for stairs that can illuminate a stair tread on the step plate.

In addition, by exerting light modulation control of the surface light emitting body in each of the panel cases using the power module housed in the hub case, light modulation suitably applied to an atmosphere of a place where the illuminating device is disposed or a place where the illuminating device is being used.

### BRIEF DESCRIPTION OF THE DRAWINGS

The above and other objects, advantages, and features of the present invention will be more apparent from the following description taken in conjunction with the accompanying drawings in which:
Figs. 1A and 1B are front views showing a basic configuration of an illuminating device of the present invention and Fig. 1B is the front view illustrating a state where front portions of a panel case and hub case have been removed therefrom;
Fig. 2 is a perspective view showing only the panel case of Figs. 1A;
Fig. 3 is a schematic diagram showing a basic configuration of an organic ELelement suitablyusable for the illuminating device of the present invention;
Fig. 4 is a block diagram showing an example of light modulation control in the illuminating device of the present invention;
Fig. 5 is a block diagram showing an example of configurations of a power module housed in the hub case;
Fig. 6 is a side view showing a state where the illuminating device of the present invention is attached to stairs ; and
Fig. 7 is a front view showing the state where the illuminating device of the present invention is attached to stairs.

### DETAILED DESCRIPTION OF THE PREFERRED EMBODIMENTS

Best modes of carrying out the present invention will be described in further detail using various embodiments with reference to the accompanying drawings. Hereinafter, the illuminating device of the present invention is described according to embodiments shown in drawings.

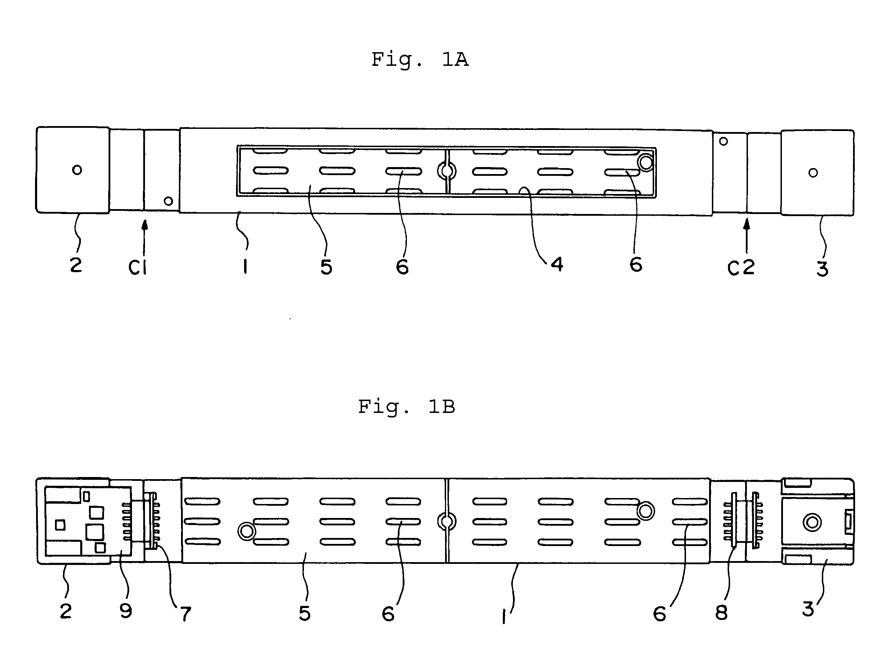

Figure 1A shows the basic configuration of the illuminating device of the present invention in which a hub case 2 is detachably coupled to one end of a panel case 1 so formed as to be long and a terminating case 3 is detachably coupled to the other end of the panel case 1. The panel case 1 and hub case 2 are so configured as to be detachable in the portion shown by the arrow C1 in Fig. 1A and the panel case 1 and terminating case 3 are so configured as to be detachable in the portion shown by the arrow C2 in Fig. 1A.

On the front surface of the panel case 1 is formed a rectangular window hole 4 through which light from the organic EL element 5 serving as a surface light-emitting body disposed in the panel case 1 is emitted as illuminating light. The reference No. 6 shows each of a plurality of slit-like ventilation holes formed on the organic EL element 5, which is used to dissipate heat generated in the organic EL element 5.

Figure 1B shows a state in which panels attached on the front side of the panel case 1, hub case 2, and terminating case 3 have been removed therefrom. In the panel case 1, the organic EL element 5 formed of a rectangular is disposed in a manner to occupy approximately the whole area of the panel case 1. A connector 7 adapted to connect the hub case 2 detachably is placed on one end of the panel case 1 and a connector 8 adapted to connect the terminating case 3 detachably is placed on the other end of the panel case 1. Moreover, in the hub case 2 is disposed a circuit board on which circuit elements or the like making up the power module 9 described later are mounted.

In the state shown in Fig. 1A and 1B, the terminating case 3 is connected detachably to the other end of the panel case 1, however, as described later, in stead of the terminating case 3, a plurality of panel cases each having the same configuration as the panel case 1 is allowed to be sequentially connected in series by using the connectors 7 and 8. That is, by connecting the terminating case 3 to an end of the last panel case 1 connected in series, the terminating case 3 performs a function of returning back transmission signals passing through each of the panel cases 1 and it is thus defined that the terminating case 3 terminates electrical and mechanical operations of the panel cases 1.

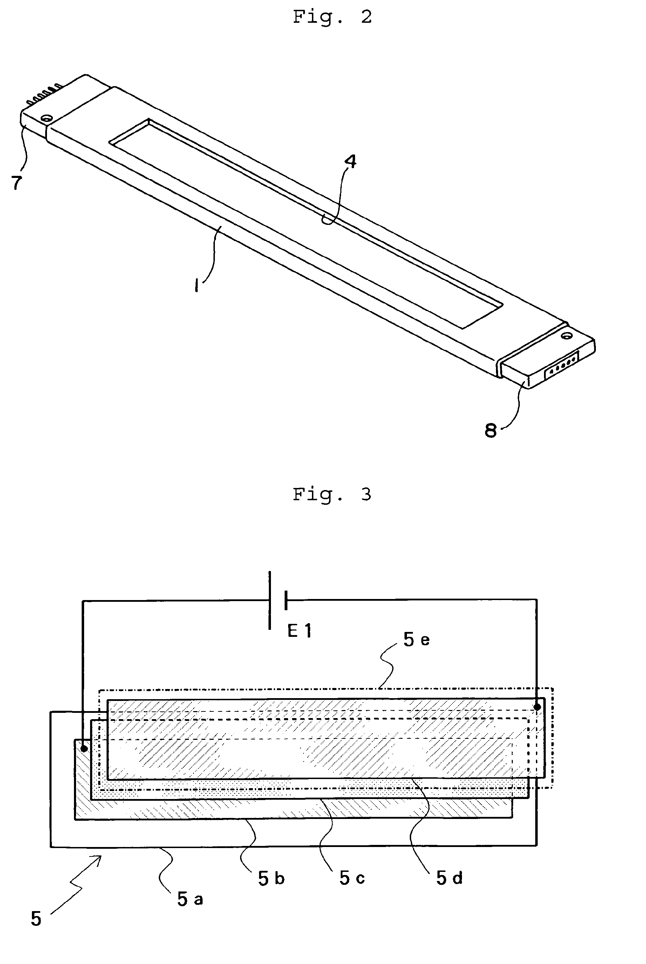

Figure 2 is a perspective view showing an appearance configuration of the panel case 1 only, in which the connector 7 formed on one end of the panel case 1 is of a male type and the connector 8 formed on the other end of the panel case 1 is of a female type.

Thus, by mounting the male-type connector 7 on one end of the panel case 1 and by mounting the female-type connector 8 on the other end thereof, as described as above, the plurality of panel cases 1 can be sequentially connected in series and electrical connection between the panel case 1 and the power module 9 in the hub case can be established. In addition, though not illustrated in the drawings, the panel case 1 is adapted to house a power supply line to sequentially supply driving power to the organic EL element 5 connected to a rear stage of the panel case 1 and a signal line to convey transmission signals fed from the power module 9.

Figure 3 shows an example of a basic configuration of the organic EL element 5 operating as the surface light-emitting body described above. In Fig. 3, a state is shown in which each layer making up the organic EL element 5 is separated from one another in a direction of the layer. That is, in the organic EL element of this type, on a single side of an element forming substrate 5a made of a transparent material is first formed a transparent electrode 5b made of, for example, ITO (Indium Tin Oxid, which serves as a first electrode. Then, a light-emitting functional layer 5c made of an organic substance is formed in a manner to be overlain on the transparent electrode 5b. In some cases, the light-emitting functional layer 5c may be so formed as to have a single layer structure made up of an organic light-emitting layer, a two-layered structure made up of an organic hole transporting layer and organic light-emitting layer, a three-layered structure made up of an organic hole transporting layer, organic light-emitting layer, and organic electron transporting layer, or a multi-layered structure made up of a hole injection layer or electron injection layer appropriately interposed among these layers. In Fig. 3, the above light emitting functional layer is illustrated by using the reference No. 5c in the form of one layer.

Moreover, on the light emitting functional layer 5c is formed a metal rear electrode 5d mainly made of a material such as aluminum as a second electrode. On the metal rear electrode 5d is mounted a sealing member 5e by which the organic EL element 5 made up of the transparent electrode 5b, light-emitting functional layer 5c, and rear electrode 5d are sealed between the sealing member 5e and the element forming substrate 5a.

Then, DC power E1 is applied between the transparent electrode 5b and rear electrode 5d. By the supply of the power E1, light generated in the light-emitting layer 5c transmits through the transparent electrode 5b and transparent substrate 5a and the transmitted light can be used as illuminating light. Moreover, when the light emitted from the organic EL element is used for illumination, in general, the luminescent color is preferably a white (daylight color), however, by selecting a material for the light-emitting layer 5c, the organic EL element can provide a variety of luminescent colors.

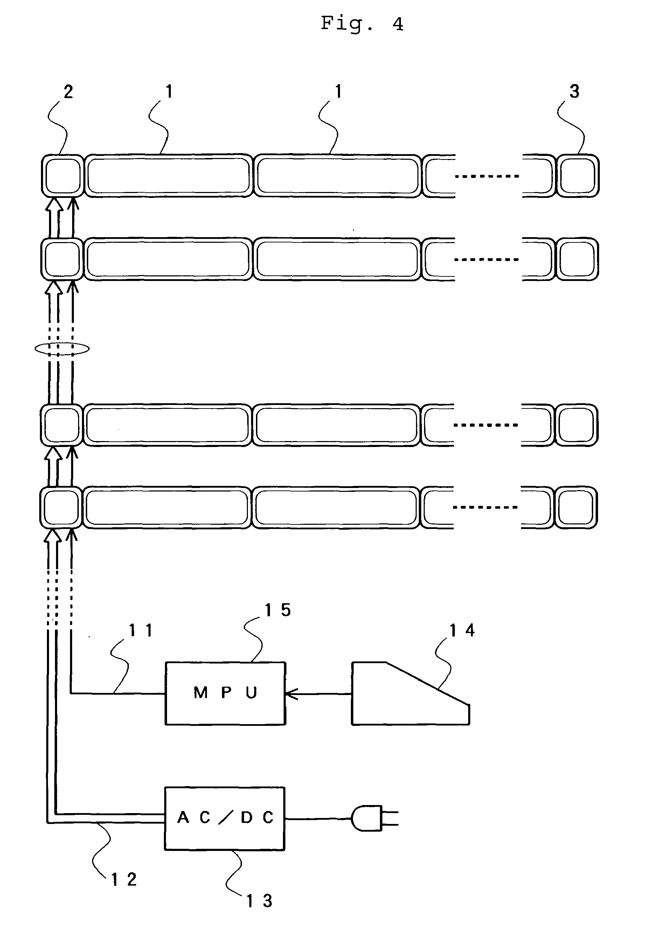

Figure 4 shows an example in which an illuminating device is constructed by using the panel case 1, hub case 2, and terminating case 3. Figure 4 is a diagram illustrating the configuration in which by using the connectors 7 and 8 attached respectively at both ends of each of the panel cases 1 a plurality of panel cases 1 is sequentially connected in series, with the hub case 2 at the head of the procession of the panel cases 1 and the terminal case 3 is connected to a last panel case of the procession of the panel cases 1.. In the example of Fig. 4, there is provided a plurality of sets of the configuration described above, that is, each set being made up of the hub case 2, panel case 1, and terminating case 3.

Communication control lines 11 are cascade connected to the power module 9 housed in each hub case 2 and power supply lines 12 are connected in the same way. Driving power fed from an AC-DC converter power unit 13 is supplied via the power supply line 12 to the power module 9 housed in each hub case 2. A light modulation control signal generated by a controller 15 made up of a microprocessor which has received an instruction from a light modulation control board 14 is supplied via the communication control line 11 to the power module 9 housed in each hub case 2.

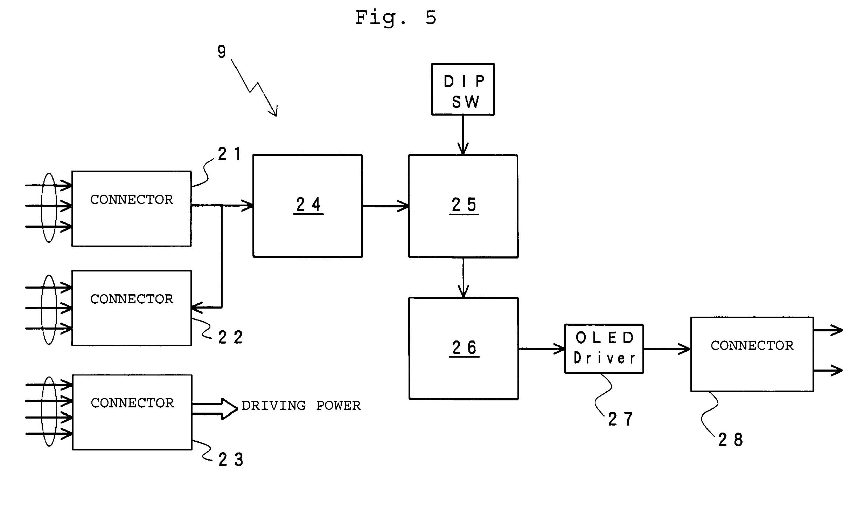

Figure 5 is a block diagram showing an example of configurations of the power module 9 housed in the hub case 2. The power module 9 has connectors 21 and 22 to which the communication control lines 11 are cascade connected and a connector 23 to receive driving power via the power supply line 12 from the AC-DC converter power unit 13.

The block shown by the reference No. 24 is a communication interface module 24 connected to the connectors 21 and 22. A system control module 25 is connected to the communication interface module 24. The system control module 25 is connected with, for example, an 8 bit DIP (Dual In-line Package) switch, which is used to exert independent light modulation control, for every panel case 1 (organic EL element 5).

To the system control module 25 is connected a light modulation control module 26 which is adapted to supply a light modulation (light emitting) control signal to a light modulation control driver 27 which controls the panel case 1 (organic EL element 5) according to light modulation control data fed from the system control module 25. Then, driving power outputted from the light modulation control driver 27 is supplied via the connector 28 to each of the panel cases 1 connected in series with the hub case 2 at the head of the procession of the panel cases 1 and is used to drive the organic EL element 5 housed in each panel case for lighting.

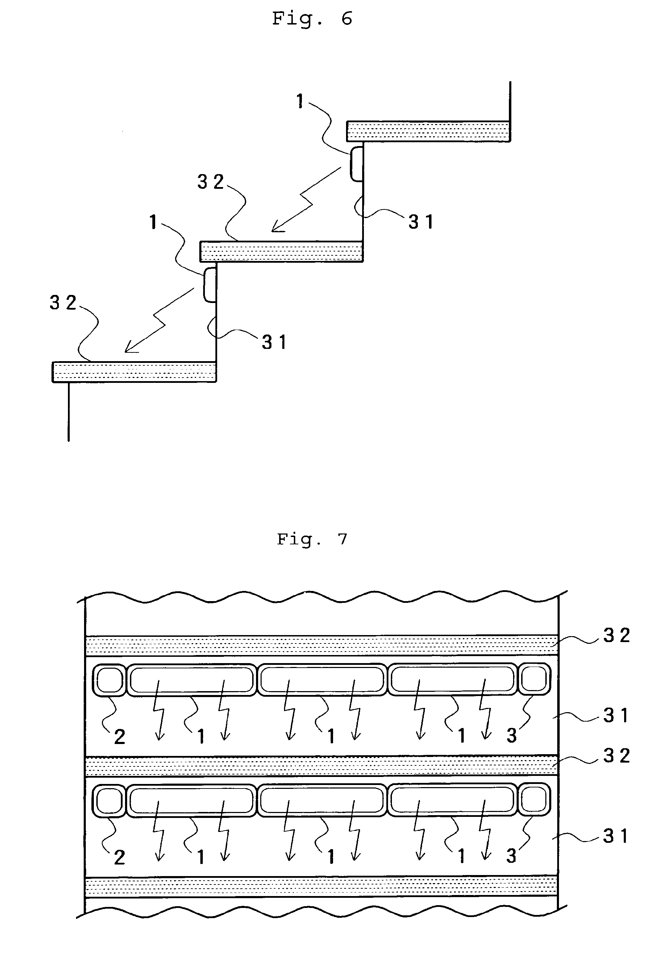

Figures 6 and 7 are diagram showing examples in which the illuminating device shown in Fig. 5 is used for the illumination of stairs. Figure 6 shows a state in which the stairs are seen from the side and Fig. 7 shows a state in which the stairs are seen from the front. In these examples, the plurality of panel cases 1 are sequentially connected in series with the hub case 2 housing the power module 9 at the head of the procession of the panel cases 1 and the set (in Fig. 6, the set has the same reference No. 1 as the panel case), which is made up of the panel case procession in which the terminating case 3 is connected last, is attached to each stair riser 31 placed perpendicularly to each step plate 32. This realizes the illuminating device for stairs capable of illuminating stair treads on each step plate 32.

In the illuminating device for stairs of the present invention, it is possible, in ordinary cases, to control the illuminating device so as to provide proper luminance by using the light modulation module 26. In addition, the illuminating device can be used in a variety of manners of light modulation in which, in the case of bringing about a gay atmosphere in such a place as a meeting and event site, for example, the illuminating device is allowed to flash for each set of stairs and/or the light from the illuminating device is allowed to be modulated for every panel case 1 making up the plurality of panel cases 1 connected in series.

Moreover, in the embodiment described above, the example in which the organic EL element is used as the surface light-emitting body housed in the panel case 1 is shown, however, a luminescent element such as an inorganic EL element or the like can be employed.

It is apparent that the present invention is not limited to the above embodiments but may be changed and modified without departing from the scope and spirit of the invention.

## Claims

1. An illuminating device comprising:
a panel case housing a surface light emitting body for illumination; and
a hub case housing a power module able to supply driving power to said surface light emitting body and being detachably connected to a part of said panel case;
wherein said panel case housing said surface light emitting body is constructed so that each of a plurality of panel cases is able to be connected to one another and said power module housed in said hub case supplies driving power to said plurality of panel cases each being connected to one another.

2. The illuminating device according to Claim 1, wherein said power module housed in said hub case supplies driving power to said surface light emitting body mounted in said panel case connected to said hub case and exert light modulation control.

3. The illuminating device according to Claim 1, wherein said panel case is so constructed as to be long and wherein said hub case is allowed to be connected to one end of a first panel case and an end of a second panel case formed to be long is allowed to be connected to the other end of said first panel case and a third panel case and its succeeding cases formed to be long are allowed to be sequentially connected, in series, to the other end of said second panel case.

4. The illuminating device according to Claim 3, wherein said power module housed in said hub case supplies driving power to said surface light emitting body mounted in said panel case connected to said hub case and exerts light modulation.

5. The illuminating device according to Claim 2, wherein a plurality of sets so constructed to have panel cases sequentially connected, in series, to one another with said hub case at a head of a procession of panel cases is provided wherein driving power is supplied to each power module housed in said hub case of each set and light modulation for said surface light emitting bodies housed in said panel cases of each set is exerted independently by said power module housed in said each hub case for every set.

6. The illuminating device according to Claim 4, wherein a plurality of sets so constructed to have panel cases sequentially connected, in series, to one another with said hub case at a head of a procession of panel cases is provided wherein driving power is supplied to each power module housed in said hub case of each set and light modulation for said surface light emitting bodies housed in said panel cases of each set is exerted independently by said power module housed in said each hub case for every set.

7. The illuminating device according to any one of Claim 1 to Claim 6,
wherein said surface light emitting body is constructed by an organic EL element.
